# EUROPÄISCHE PATENTSCHRIFT

(11) **EP 3 328 252 B1**
(45) Veröffentlichungstag und Bekanntmachung des Hinweises auf die Patenterteilung: **25.12.2019**
(21) Anmeldenummer: 16742293.0
(22) Anmeldetag: 22.07.2016
(51) Int. Cl.: A47J 43/044, A47J 43/07, A47J 43/08

(54) **ELEKTROMOTORISCHES KÜCHENGERÄT MIT KUPPLUNG**
ELECTROMOTIVE COOKING DEVICE WITH A COUPLING
APPAREIL DE CUISINE À MOTEUR ÉLECTRIQUE, POURVU D'UN ACCOUPLEMENT

(30) Priorität: 28.07.2015 DE 102015214283
(43) Veröffentlichungstag der Anmeldung: 06.06.2018
(73) Patentinhaber: BSH Hausgeräte GmbH, 81739 München (DE)
(72) Erfinder: BERZELAK, Matej, 3333 Ljubno (SI); IVANUSIC, Marko, 1000 Ljubljana (SI); KOVACEC, Bostjan, 1420 Trbovlje (SI); PESEC, Jurij, 3301 Petrovce (SI)
(86) Internationale Anmeldenummer: PCT/EP2016/067532
(87) Internationale Veröffentlichungsnummer: WO 2017/017013

(56) Entgegenhaltungen:
- EP-A1- 2 407 071
- EP-A2- 0 529 287
- DE-A1- 3 307 023
- US-A- 1 765 095
- US-A- 4 723 719

## Beschreibung

Die vorliegende Erfindung betrifft ein elektromotorisches Küchengerät mit einer Kupplung, die ein Kupplungsteil und einen Einsteckkolben zur Übertragung einer Drehbewegung aufweist.

In elektromotorischen Küchengeräten wie beispielsweise Rührgeräten oder Zerkleinerungsgeräten werden zur Übertragung von Drehbewegungen bzw. -momenten zwischen Wellen gemeinhin Kupplungen verwendet. Kupplungen können starr oder lösbar ausgebildet sein, und sie können Wellen mit gleicher oder mit verschiedenen Drehachsen verbinden.

Das für die Übertragung des Drehmoments erforderliche Ineinandergreifen der Kupplungskomponenten kann auf verschiedene Weisen vorgesehen sein. Insbesondere gibt es die Gruppen der kraft- und der formschlüssigen Kupplungen. Zur letzteren Gruppe gehören insbesondere die Zahnkupplungen, bei denen ineinandergreifende Verzahnungen die Kraftübertragung verwirklichen. In den Druckschriften DE 33 07 023 A1, EP 0 529 287 A2, US 1 765 095 A und US 4 723 719 A sind jeweils Küchengeräte mit einem ankuppelbaren Werkzeug offenbart. Die Druckschrift EP 2 407 071 A1 offenbart eine elektromotorisch betriebene Küchenmaschine, die in einem Kupplungsbereich eine Dämpfungseinrichtung umfasst.

Beim Zusammensetzen der Kupplungskomponenten können sich die Kupplungskomponenten in ungünstiger Weise miteinander verkanten. Insbesondere ggf. vorhandene Verzahnungen können schon bei leicht mangelnder Präzision beim Zusammenführen in eine unerwünschte Stellung zueinander geraten. Beispielsweise bei mehrteiligen Geräten, die von einem Anwender z.B. zur Reinigung auseinandergenommen und zum Gebrauch wieder zusammengesetzt werden, tritt dieses Problem häufig auf. Zum einen ist dadurch das Zusammensetzen erschwert und kann dementsprechend zu einem Zeitverlust führen, zum anderen können leichte Fehlstellungen der Wellen zueinander entstehen, die unbemerkt bleiben und zu Verschleiß und unerwünschter Geräuschentwicklung führen können.

Um derartige Geräusche zu reduzieren, werden herkömmlich Dämpfungsmaterialien verwendet, oder es werden Kupplungsteile aus verschiedenen Materialien eingesetzt, beispielsweise Metall für eines der Teile und Plastik für ein anderes. Diese Maßnahmen sind jedoch aufwendig und kostspielig.

Die vorliegende Erfindung hat die Aufgabe, eine Technik vorzusehen, mit der die genannten Nachteile auf einfache Weise vermieden werden können.

Die Aufgabe wird gelöst durch ein elektromotorisches Küchengerät gemäß den Ansprüchen 1 und 6. Bevorzugte Ausführungsformen sind in den Unteransprüchen offenbart.

Ein erstes erfindungsgemäßes elektromotorisches Küchengerät weist einen Motor zum Antreiben einer Dreheinrichtung und eine lösbare Kupplung auf. Der Motor ist in einem ersten Geräteteil angeordnet und die Dreheinrichtung in einem zweiten Geräteteil, das mit dem ersten Geräteteil verbunden ist oder verbunden werden kann. Die Kupplung umfasst ein Kupplungsteil und einen Einsteckkolben zum Übertragen einer Drehbewegung von einer Motorausgangswelle auf die Dreheinrichtung. Das Kupplungsteil weist dabei eine Einstecköffnung auf, die dazu eingerichtet, den Einsteckkolben mindestens teilweise aufzunehmen; die Einstecköffnung bildet die Öffnung eines Aufnahmeschachtes oder -ringes in den der Einsteckkolben eingesetzt werden kann. Das Kupplungsteil weist an der Einstecköffnung (z.B. um diese herum angeordnet) eine Mehrzahl von Führungselementen auf, die jeweils eine gewölbte Oberfläche haben; die (vorzugsweise nach außen) gewölbte Oberfläche kann beispielsweise im Wesentlichen die Form einer Ellipsoidkappe, insbesondere einer Kugelkappe haben.

Die gewölbten Oberflächen der Führungselemente ermöglichen ein einfaches Einstecken des Einsteckkolbens, weil dieser entlang den Wölbungen in die Einstecköffnung des Kupplungsteils hineingleiten kann. Auch bei relativ zum Kupplungsteil zunächst ungenau positioniertem Einsteckkolben korrigieren die Führungselemente dank ihrer gewölbten Oberfläche die Einsteckrichtung und den Einsteckkolben in die Einstecköffnung führen. Verkantungen und Fehlstellungen können so auf einfache Weise verhindert werden, und auf Ausgleichsmaßnahmen für derartige Verkantungen (wie beispielsweise die Verwendung von Dämpfungsmaterialien) kann verzichtet werden.

Ein zweites erfindungsgemäßes elektromotorisches Küchengerät weist einen Motor zum Antreiben einer Dreheinrichtung und eine lösbare Kupplung auf. Der Motor ist in einem ersten Geräteteil und die Dreheinrichtung in einem zweiten Geräteteil angeordnet, das an der Kupplung mit dem ersten Geräteteil verbindbar oder verbunden ist, wobei die Kupplung ein Kupplungsteil und einen Einsteckkolben zum Übertragen einer Drehbewegung von einer Motorausgangswelle auf die Dreheinrichtung sowie eine Einstecköffnung zum Aufnehmen mindestens eines Teils eines Einsteckkolbens aufweist. Der Einsteckkolben weist eine Kuppe mit einer Mehrzahl an (vorzugsweise nach außen) gewölbten Führungssegmenten auf; die Führungssegmente können beispielsweise die Form eines nach Kugelsegments haben. Die Mehrzahl kann beispielsweise genau 3, 4, 5, 6 oder 8 Führungssegmente umfassen.

Ein derartiges elektromotorisches Küchengerät ermöglicht auch bei zunächst ungenauer Einsteckbewegung ein besonders gutes Einsetzen des Einsteckkolbens in das Kupplungsteil, weil die Wölbungen an der Kuppe ein Gleiten des Einsteckkolbens aus einer Fehlstellung heraus in einen Aufnahmeschacht fördern.

Das Kupplungsteil in einem ersten oder zweiten erfindungsgemäßen Küchengerät kann in bzw. am ersten Geräteteil oder in bzw. am zweiten Geräteteil angeordnet sein. Es ist vorzugsweise dazu eingerichtet, eine Drehbewegung des eingesteckten Einsteckkolbens zu übernehmen oder eine Drehbewegung auf den eingesteckten Einsteckkolben zu übertragen; das Kupplungsteil kann dabei zu beiden dieser Alternativen geeignet sein (in diesem Fall richtet sich die Übertragung der Drehbewegung danach, welche der beiden Komponenten - also Kupplungsteil oder Einsteckkolben - angetrieben wird) oder lediglich zu einer von beiden.

Vorzugsweise ist die Mehrzahl von Führungselementen bei einem ersten erfindungsgemäßen elektromotorischen Küchengerät entlang einem Ring angeordnet, der beispielsweise die Einstecköffnung umlaufen kann. Durch eine derartige Anordnung kann eine Fehlstellung des Einsteckkolbens beim Einstecken an mehreren Seiten korrigiert werden. Ein derartiger Ring ist dabei vorzugsweise in einer Ebene angeordnet, die senkrecht zu einer Rotationsachse des Kupplungsteils und/oder des Einsteckkolbens liegen kann. Auf diese Weise wird eine gleichmäßige Führung des Einsteckkolbens beim Einstecken erreicht.

Die Führungselemente des Kupplungsteils eines ersten erfindungsgemäßen elektromotorischen Küchengeräts können dazu eingerichtet sein, (nach einem Einstecken des Einsteckkolbens) als Kraftübertragungselemente zu dienen und dabei mit geeigneten Kraftübertragungssegmenten des Einsteckkolbens in Wirkverbindung zu stehen. Auf diese Weise kann eine Drehbewegung des Kupplungsteils auf den Einsteckkolben übertragen werden und/oder umgekehrt.

Alternativ kann ein erstes erfindungsgemäßes elektromotorisches Küchengerät ein Kupplungsteil aufweisen, das zusätzlich zu den Führungselementen eine Mehrzahl an Kraftübertragungselementen umfasst, die dazu eingerichtet sein können, mit geeigneten Kraftübertragungssegmenten des Einsteckkolbens in Wirkverbindung zu stehen (und so die Übertragung der Drehbewegung zu ermöglichen). Die Kraftübertragungselemente können dabei die Form von Stegen am Rand eines Aufnahmeschachts für den Einsteckkolben haben.

In einer ersten Variante einer Ausführungsform mit Kraftübertragungselementen können die Führungselemente als separate Bauteile ausgebildet sein, beispielweise als Mehrzahl von Ellipsoiden oder sogar Kugeln, die jeweils an einem nach außen weisenden Ende der Kraftübertragungselemente angeordnet und dort drehbar gelagert sein können (also an einem Ende, das einer mit dem Einsteckkolben verbundenen Welle zugewandt ist); vorzugsweise stimmen dabei die Anzahl an Führungselementen und die Anzahl an Kraftübertragungselementen überein. Die drehbare Lagerung kann jeweils eine Drehachse umfassen, die vorzugsweise entlang oder parallel zu einer Außentangente an die Einstecköffnung verlaufen kann; in diesem Fall ist also eine Drehung der ellipsoid- oder kugelförmigen Führungselemente jeweils in Richtung des Inneren der Einstecköffnung (und ggf. zusätzlich in entgegengesetzte Richtung) möglich. Alternativ kann bei im Wesentlichen kugelförmigen Führungselementen ein Drehlager einen Teil der Kugeln von außen umfassen (beispielsweise in Form eines Käfigs) und dabei eine Drehung der kugelförmigen Führungselemente in jede Richtung erlauben.

In einer zweiten Variante einer Ausführungsform mit Kraftübertragungselementen können die Führungselemente einstückig mit den Kraftübertragungselementen als deren Fortsatz und/oder Ende ausgebildet sein. Vorzugsweise ist dabei ein Übergang zwischen Führungselement und Kraftübertragungselement (z.B. im Innern eines Aufnahmeschachtes für den Einsteckkolben) jeweils kantenfrei. Insbesondere kann die Wölbung jedes der Führungselemente jeweils mindestens abschnittweise (z.B. im Innern eines Aufnahmeschachtes für den Einsteckkolben) tangential fortgesetzt in eine Oberfläche eines zugehörigen Kraftübertragungselementes übergehen. Dadurch wird eine besonders gute Führung eines Einsteckkolbens während eines Einsteckvorgangs erreicht.

Gemäß einer vorteilhaften Variante eines ersten erfindungsgemäßen Küchengeräts umfasst die Mehrzahl an Führungselementen genau 3, 4, 5, 6 oder 8 Führungselemente. Bei einer derartigen Anzahl können insbesondere bei einer ringartigen Anordnung günstige Abmessungen für die gewölbte Oberfläche gewählt werden.

Gemäß einer bevorzugten Ausführungsform besteht das Kupplungsteil ganz oder teilweise aus Kunststoff. Das Kupplungsteil kann damit einfach hergestellt werden und ist besonders leicht.

Besonders bevorzugt ist eine Kombination von erstem und zweitem elektromotorischen Küchengerät, bei dem sowohl der Einsteckkolben eine Kuppe mit einer Mehrzahl an gewölbten Führungssegmenten aufweist, als auch an der Einstecköffnung des Kupplungsteils eine Mehrzahl von Führungselementen für den Einsteckkolben angeordnet ist, die jeweils eine gewölbte Oberfläche aufweisen.

Dadurch kann das Einstecken besonders einfach fehlerfrei realisiert werden.

Vorzugsweise ist der Einsteckkolben im Wesentlichen zwischenraumfrei in das Kupplungsteil eingepasst. Auf diese Weise kann zum einen eine gute Kraftübertragung erreicht werden, zum anderen werden so Verkantungen vermieden, weil kein überschüssiger Raum vorhanden ist.

Gemäß einer vorteilhaften Ausführungsform eines ersten oder zweiten erfindungsgemäßen Küchengeräts weist das Kupplungsteil eine Mehrzahl von Kraftübergangselementen und weist der Einsteckkolben eine Mehrzahl von Kraftübergangssegmenten auf. Die Kraftübergangselemente und die Kraftübergangssegmente stehen dabei in Wirkverbindung miteinander.

Kraftübergangselemente und Kraftübergangssegmente leisten bei einer derartigen Ausführungsform also die Übertragung der Drehbewegung, was insbesondere aufgrund der großen Oberfläche der Mehrzahlen an Kraftübergangselementen und -segmenten besonders effizient und materialschonend ist. Besonders bevorzugt ist dabei eine Ausführungsform, bei der Kraftübergangselemente und Kraftübergangssegmente im Wesentlichen zwischenraumfrei aneinander angepasst sind.

Besonders bevorzugt ist eine Ausführungsform, bei der der Einsteckkolben eine Mehrzahl an Kraftübertragungssegmenten aufweist, an deren Kuppen die gewölbten Führungssegmente jeweils ausgebildet sind und die dazu eingerichtet sind, in das Kupplungsteil (z.B. in einen Aufnahmeschacht oder einen Aufnahmering des Kupplungsteils) eingesetzt zu werden und dort mit Kraftübertragungselementen des Kupplungsteils in Wirkverbindung zu stehen. Damit kann die Drehung vom Einsteckkolben auf das Kupplungsteil oder umgekehrt übertragen werden.

Vorzugsweise sind die Kraftübergangssegmente ringartig nebeneinander um eine Drehachse des Einsteckkolbens herum angeordnet. Bevorzugt ist eine Ausführungsform, bei der die Kraftübergangssegmente entlang einer Außenkontur des Einsteckkolbens jeweils im Wesentlichen kreiszylindrisch mit Zylinderachse parallel zur Drehachse des Einsteckkolbens ausgebildet sind. Ein derart geformter Einsteckkolben kann insbesondere kantenfrei ausgebildet sein, wodurch Verklemmungen von Kupplungsteil und Einsteckkolben vermieden werden können.

Gemäß einer bevorzugten Ausführungsform bestehen das Kupplungsteil und/oder der Einsteckkolben ganz oder teilweise aus Kunststoff. Eine derartige Kupplung ist besonders leicht, was insbesondere bei Haushaltsgeräten vorteilhaft ist.

Das elektromotorische Küchengerät kann beispielsweise ein Standmixer, ein Pürierstab oder ein Handrührgerät sein.

Im Folgenden werden bevorzugte Ausführungsbeispiele der Erfindung anhand von Zeichnungen näher erläutert. Es versteht sich, dass einzelne Elemente und Komponenten auch anders ausgeführt und/oder kombiniert werden können als dargestellt.

Es zeigen schematisch:
- Figur 1: ein Kupplungsteil und einen Einsteckkolben für ein elektromotorisches Küchengerät gemäß beispielhaften Ausführungsformen der vorliegenden Erfindung;
- Figur 2: eine Querschnitt durch ein Kupplungsteil gemäß einer beispielhaften Ausführungsform der vorliegenden Erfindung und durch einen Einsteckkolben.

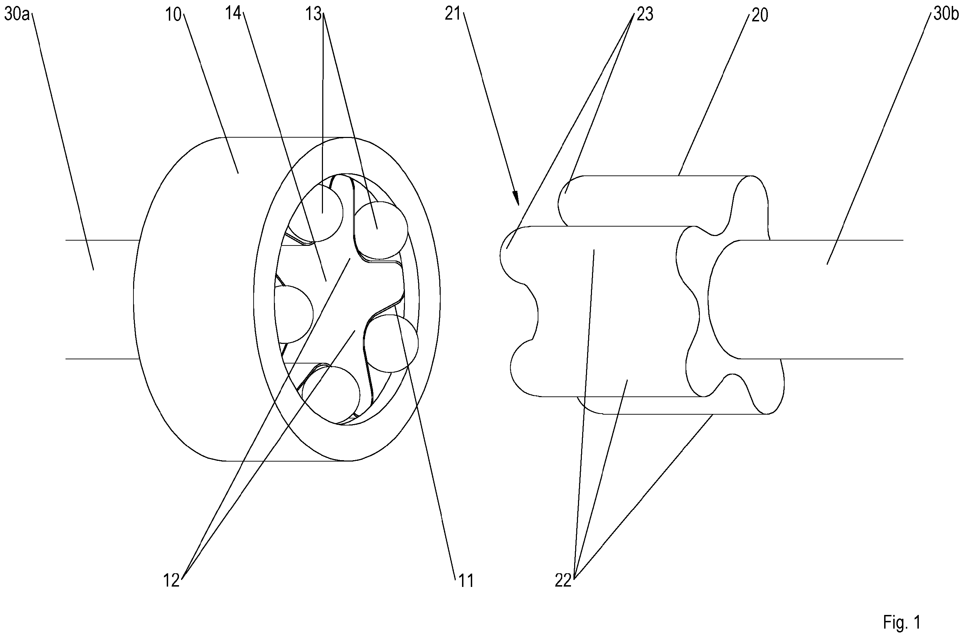

In Figur 1 sind perspektivisch ein Kupplungsteil 10 und ein Einsteckkolben 20 gemäß jeweils einer Ausführungsform der vorliegenden Erfindung vor einem Einstecken des Einsteckkolbens in das Kupplungsteil dargestellt; zusammen bilden das Kupplungsteil 10 und der Einsteckkolben 20 eine Ausführungsform einer Kupplung für ein erfindungsgemäßes elektromotorisches Küchengerät, bei dem sowohl der Einsteckkolben eine Kuppe mit einer Mehrzahl an gewölbten Führungssegmenten aufweist, als auch an der Einstecköffnung des Kupplungsteils eine Mehrzahl von Führungselementen für den Einsteckkolben angeordnet ist, die jeweils eine gewölbte Oberfläche aufweisen. Die Merkmale eines ersten und eines zweiten erfindungsgemäßen elektromotorischen Küchengeräts können also mit einer derartigen Kupplung kombiniert werden.

Das Kupplungsteil 10 dient - nach einem Einstecken des Einsteckkolbens 20 - einer Übertragung einer Drehbewegung von einer mit dem Kupplungsteil verbundenen Welle 30a auf eine mit dem Einsteckkolben verbundenen Welle 30b oder umgekehrt.

Gemäß einem speziellen Ausführungsbeispiel könnte das Kupplungsteil beispielsweise in einen Standfuß eines Standmixers integriert sein und der Einsteckkolben in einen Behälter des Standmixers, oder umgekehrt. Gemäß einem anderen speziellen Beispiel könnte das Kupplungsteil in einen Handmotorgerät eines Rührgeräts (oder Pürierstabs) integriert sein und der Einsteckkolben in einen zugehörigen Quirl oder Aufsatz (oder umgekehrt).

Das Kupplungsteil weist eine Einstecköffnung 11 auf, die eine Mündung eines Aufnahmeschachts 14 ist. Der Aufnahmeschacht 14 ist dazu eingerichtet, den eingesteckten Einsteckkolben 20 mindestens teilweise aufzunehmen. Im Aufnahmeschacht 14 sind weiterhin (im vorliegenden Beispiel fünf) Kraftübergangselemente 12 ausgebildet, die dazu eingerichtet sind, nach einem Einstecken des Einsteckkolbens mit (im vorliegenden Beispiel fünf) Kraftübergangssegmenten 22 des Einsteckkolbens 20 in Wirkverbindung zu treten; damit kann eine Drehbewegung der mit dem Kupplungsteil verbundenen Welle 30a auf die mit dem Einsteckkolben 20 verbundene Welle 30b übertragen werden oder umgekehrt.

Das dargestellte Kupplungsteil weist ferner an der Einstecköffnung 11 eine Mehrzahl an (vorliegend fünf) Führungselementen 13 auf, die entlang einem Ring (um die Einstecköffnung) angeordnet sind. Die Führungselemente 13 sind jeweils kugelförmig ausgebildet und weisen demgemäß eine nach außen (also in Richtung der mit dem einzusteckenden Einsteckkolben verbundenen Welle) gewölbte Oberfläche auf. Die Führungselemente 13 können als Fortsatz der Kraftübergangselementen 12 an der von der Welle 30a weg weisenden (und nach einem Einstecken des Einsteckkolbens 20 der Welle 30b zugewandten) Seite des Kupplungsteils angeordnet sein. Dabei können sie starr ausgebildet oder drehbar gelagert sein, beispielsweise in einer (nicht gezeigten) Fassung.

Die Führungselemente 13 ermöglichen bei einem Einstecken des Einsteckkolbens 20 eine Korrektur einer etwaigen anfänglichen Fehlstellung, indem sie ein Gleiten der Kuppe 21 des Einsteckkolbens 20 an der dem Kupplungsteil zugewandten Oberfläche ermöglichen und so den Einsteckkolben durch die Einstecköffnung 11 und in den Aufnahmeschacht 14 des Kupplungsteils 10 führen. Auf diese Weise kann ein unerwünschtes Verkanten des Einsteckkolbens im Aufnahmeschacht des Kupplungsteils verhindert werden.

Der dargestellte Einsteckkolben 20 weist eine Kuppe 21 mit einer Mehrzahl an nach außen (also in Richtung der mit dem Kupplungsteil 13 verbundenen Welle 30a) gewölbten Führungssegmenten 23 auf. Die Führungssegmente 23 können beispielsweise als Segmente von Ellipsoiden, insbesondere als Kugelsegmente (speziell z.B. als Halbkugeln) ausgebildet sein. Im dargestellten Ausführungsbeispiels sind die Führungssegmente 23 jeweils als Fortsatz eines zugehörigen Kraftübergangssegments 22 einstückig und kantenfrei mit diesem ausgebildet, alternativ können die Führungssegmente auch als separate Bauteile an den Kraftübergangssegmenten befestigt sein.

Die Kraftübergangssegmente 22 des gezeigten beispielhaften Einsteckkolbens 20 sind entlang einer Außenkontur des Einsteckkolbens jeweils im Wesentlichen kreiszylindrisch mit Zylinderachse parallel zur Drehachse des Einsteckkolbens ausgebildet. Dies ermöglicht ein gutes Einstecken des Einsteckkolbens sowie eine stabile Wirkverbindung mit den Kraftübergangselementen 12 des Kupplungsteils 10.

Die Kraftübergangselemente 12 des Kupplungsteils und die Kraftübergangssegmente 22 des Einsteckkolbens 20 sind im gezeigten Beispiel in ihrer Form so aneinander angepasst, dass der Einsteckkolben 20 nach einem Einstecken zwischenraumfrei in das Kupplungsteil 10, also in dessen Aufnahmeschacht 14 eingepasst ist.

Die Führungssegmente 23 verbessern ein bereits durch die Führungselemente 13 des Kupplungsteils ermöglichtes Gleiten der Kuppe 21 des Einsteckkolbens in die Einstecköffnung 11 und den Aufnahmeschacht 14 hinein und unterstützen damit die Korrektur einer Fehlstellung von Kupplungsteil und Einsteckkolben zueinander zu Beginn eines Einsteckvorgangs.

Im Beispiel der das Kupplungsteil 10 und den Einsteckkolben 20 umfassenden Kupplung sind sowohl Kupplungsteil 10 als auch Einsteckkolben 20 gemäß einer jeweiligen Ausführungsform der vorliegenden Erfindung ausgebildet. Gemäß alternativen Kupplungen für erste bzw. zweite erfindungsgemäße elektromotorische Haushaltsgeräte ist jeweils nur eines von Kupplungsteil und Einsteckkolben mit (vor-)gewölbten Führungselementen bzw. -segmenten ausgebildet, die bereits allein jeweils eine Korrektur einer Fehlstellung ermöglichen.

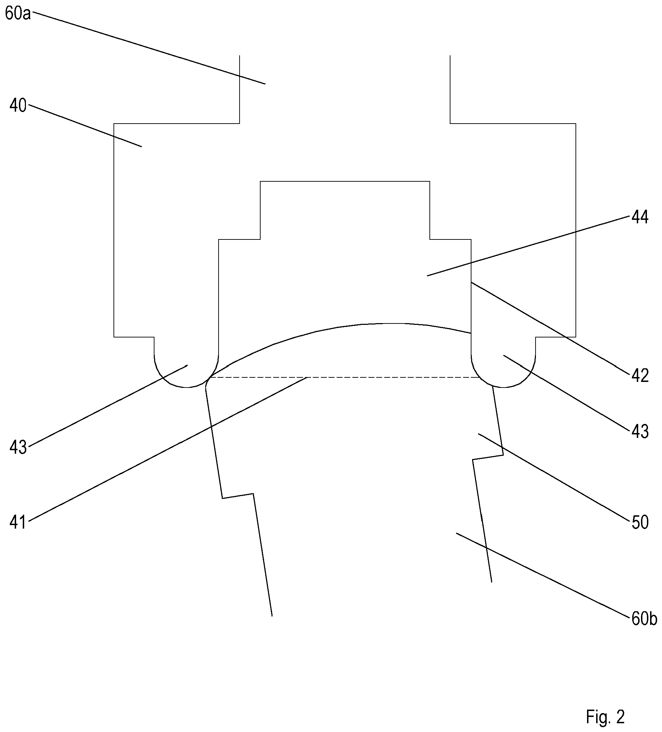

In Figur 2 ist ein Querschnitt durch ein Kupplungsteil 40 gemäß einer beispielhaften Ausführungsform der vorliegenden Erfindung sowie durch einen Einsteckkolben 50 gezeigt. Das Kupplungsteil 40 ist dazu eingerichtet, nach einem Einstecken des Einsteckkolbens 50 in das Kupplungsteil 40 (insbesondere in dessen Aufnahmeschacht 44) eine Drehbewegung von einer mit dem Kupplungsteil 40 verbundenen Welle 60a auf eine mit dem Einsteckkolben 50 verbundene Welle 60b zu übertragen oder eine Drehbewegung von der Welle 60b zu übernehmen.

Das Kupplungsteil 40 weist eine (schematisch durch eine gestrichelte Linie kenntlich gemachte) Einstecköffnung 41 auf, an der (anliegend) eine Mehrzahl von Führungselementen 43 angeordnet ist. Die Führungselemente 43 weisen eine in Richtung der Welle 60b am Einsteckkolben 50 vorgewölbte Oberfläche auf. Die Führungselemente sind dabei in diesem Ausführungsbeispiel einstückig und kantenfrei als Fortsätze von Kraftübergangselementen 42 ausgebildet, die dazu eingerichtet sind, nach dem Einstecken mit entsprechenden Kraftübergangssegmenten des Einsteckkolbens 50 in Wirkverbindung zu treten.

Wie in der Figur zu erkennen ist, ist der Einsteckkolben 50 im dargestellten Einsteckmoment gegenüber dem Kupplungsteil 40 in einer leichten Fehlstellung. Die gewölbten Führungselemente 43 ermöglichen nun erfindungsgemäß eine Korrektur dieser Fehlstellung während des fortgesetzten Einsteckens, indem die dem Kupplungsteil zugewandte Kuppe des Einsteckkolbens an den Führungselementen 43 entlang in den Aufnahmeschacht 44 gleiten kann.

Die Erfindung betrifft ein elektromotorisches Küchengerät mir einer Kupplung, die ein Kupplungsteil und einen Einsteckkolben zum Übertragen einer Drehbewegung von einer Motorausgangswelle auf die Dreheinrichtung umfasst. Das Kupplungsteil weist eine Einstecköffnung zum Aufnehmen mindestens eines Teils eines Einsteckkolbens auf. An der Einstecköffnung ist eine Mehrzahl von Führungselementen für den Einsteckkolben angeordnet, die jeweils eine gewölbte Oberfläche aufweisen. Alternativ oder zusätzlich weist der Einsteckkolben eine Kuppe mit einer Mehrzahl an gewölbten Führungssegmenten auf.

### Bezugszeichen

- 10, 40: Kupplungsteil
- 11, 41: Einstecköffnung
- 12, 42: Kraftübergangselemente
- 13, 43: Führungselemente
- 14, 44: Aufnahmeschacht

- 20, 50: Einsteckkolben
- 21: Kuppe des Einsteckkolbens
- 22: Kraftübergangssegmente
- 23: Führungssegmente

- 30a, 30b, 60a, 60b: Welle

## Patentansprüche

1. Elektromotorisches Küchengerät mit einem Motor zum Antreiben einer Dreheinrichtung und mit einer Kupplung, wobei der Motor in einem ersten Geräteteil und die Dreheinrichtung in einem zweiten Geräteteil angeordnet ist, das mit dem ersten Geräteteil verbunden oder verbindbar ist, wobei die Kupplung ein Kupplungsteil (10, 40) und einen Einsteckkolben (20, 50) zum Übertragen einer Drehbewegung von einer Motorausgangswelle auf die Dreheinrichtung umfasst, wobei das Kupplungsteil eine Einstecköffnung (11, 41) aufweist, die eine Öffnung eines Aufnahmeschachts (14) oder -ringes zum Aufnehmen mindestens eines Teils des Einsteckkolbens (20, 50) ist,
**dadurch gekennzeichnet, dass**
an der Einstecköffnung (11, 41) eine Mehrzahl von Führungselementen (13, 43) für den Einsteckkolben angeordnet ist, die zur Korrektur einer Einsteckrichtung jeweils eine in Richtung einer mit dem einzusteckenden Einsteckkolben verbundenen Welle (30b) vorgewölbte Oberfläche aufweisen.

2. Elektromotorisches Küchengerät gemäß Anspruch 1, wobei die Mehrzahl von Führungselementen entlang einem Ring um die Einstecköffnung (11, 41) angeordnet ist.

3. Elektromotorisches Küchengerät gemäß einem der Ansprüche 1 oder 2, wobei die Führungselemente im Wesentlichen ellipsoidförmig oder kugelförmig ausgebildet und drehbar gelagert sind.

4. Elektromotorisches Küchengerät gemäß einem der vorhergehenden Ansprüche, wobei die Führungselemente dazu eingerichtet sind, als Kraftübergangselemente mit einer Mehrzahl von Kraftübergangssegmenten des Einsteckkolbens in Wirkverbindung zu treten.

5. Elektromotorisches Küchengerät gemäß einem der vorhergehenden Ansprüche, wobei der Einsteckkolben eine Kuppe (21) mit einer Mehrzahl an gewölbten Führungssegmenten (23) aufweist.

6. Elektromotorisches Küchengerät mit einem Motor zum Antreiben einer Dreheinrichtung und mit einer lösbaren Kupplung, wobei der Motor in einem ersten Geräteteil und die Dreheinrichtung in einem zweiten Geräteteil angeordnet ist, das mit dem ersten Geräteteil verbunden oder verbindbar ist, wobei die Kupplung ein Kupplungsteil (10, 40) und einen Einsteckkolben (20, 50) zum Übertragen einer Drehbewegung von einer Motorausgangswelle auf die Dreheinrichtung aufweist, wobei das Kupplungteil eine Einstecköffnung (11, 41) zum Aufnehmen mindestens eines Teils eines Einsteckkolbens (20, 50) aufweist,
**dadurch gekennzeichnet, dass** der Einsteckkolben eine Kuppe (21) mit einer Mehrzahl an in Richtung einer mit dem Kupplungsteil verbundenen Welle (30a) vorgewölbten Führungssegmenten (23) aufweist, die ein Gleiten des Einsteckkolbens aus einer Fehlstellung heraus in einen Aufnahmeschacht fördern.

7. Elektromotorisches Küchengerät gemäß einem der Ansprüche 5 oder 6, der eine Mehrzahl an Kraftübertragungssegmenten (22) aufweist, an deren Kuppen die gewölbten Führungssegmente (23) jeweils ausgebildet sind.

8. Elektromotorisches Küchengerät gemäß Anspruch 7, wobei die Kraftübergangssegmente (22) entlang einer Außenkontur des Einsteckkolbens jeweils im Wesentlichen kreiszylindrisch mit Zylinderachse parallel zur Drehachse des Einsteckkolbens ausgebildet sind.

9. Elektromotorisches Küchengerät gemäß einem der vorhergehenden Ansprüche, wobei das Kupplungsteil eine Mehrzahl von Kraftübergangselementen (14, 44) aufweist, wobei der Einsteckkolben eine Mehrzahl von Kraftübergangssegmenten (22) aufweist, und wobei die Kraftübergangselemente und die Kraftübergangssegmente miteinander in Wirkverbindung stehen.

10. Elektromotorisches Küchengerät gemäß Anspruch 9, wobei die Führungselemente (43) einstückig an den Kraftübergangselementen ausgebildet sind.

11. Elektromotorisches Küchengerät gemäß einem der vorhergehenden Ansprüche, wobei der Einsteckkolben im Wesentlichen zwischenraumfrei in das Kupplungsteil eingepasst ist.

12. Elektromotorisches Küchengerät gemäß einem der vorhergehenden Ansprüche, wobei das Kupplungsteil (10, 40) und/oder der Einsteckkolben (20, 50) ganz oder teilweise aus Kunststoff bestehen.

## Claims

1. An electromotive kitchen appliance with a motor for driving a turning gear and with a coupling, wherein the motor is arranged in a first appliance part and the turning gear is arranged in a second appliance part which is or can be connected to the first appliance part, wherein the coupling comprises a coupling part (10, 40) and an insertion piston (20, 50) for transmitting a rotational movement from a motor output shaft to the turning gear, wherein the coupling part has an insertion opening (11, 41) which is an opening of a receiving shaft (14) or ring for receiving at least one part of the insertion piston (20, 50),
**characterized in that**
a plurality of guide elements (13, 43) for the insertion piston is arranged at the insertion opening (11, 41), said guide elements having a pre-arched surface in the direction of a shaft (30b) connected to the insertion piston to be inserted in each case in order to correct an insertion direction.

2. The electromotive kitchen appliance as claimed in claim 1, wherein the plurality of guide elements is arranged along a ring around the insertion opening (11, 41).

3. The electromotive kitchen appliance as claimed in one of claims 1 or 2, wherein the guide elements are embodied to be essentially ellipsoidal or spherical and are mounted rotatably.

4. The electromotive kitchen appliance as claimed in one of the preceding claims, wherein the guide elements are designed to be in active connection with a plurality of force transmission segments of the insertion piston as force transmission elements.

5. The electromotive kitchen appliance as claimed in one of the preceding claims, wherein the insertion piston has a point (21) with a plurality of arched guide segments (23).

6. An electromotive kitchen appliance with a motor for driving a turning gear and with a detachable coupling, wherein the motor is arranged in a first appliance part and the turning gear is arranged in a second appliance part, which is or can be connected to the first appliance part, wherein the coupling has a coupling part (10, 40) and an insertion piston (20, 50) for transmitting a rotational movement from a motor output shaft to the turning gear, wherein the coupling part has an insertion opening (11, 41) for receiving at least one part of an insertion piston (20, 50),
**characterized in that** the insertion piston has a point (21) with a plurality of guide segments (23) which are pre-arched in the direction of a shaft (30a) connected to the coupling part, said guide segments promoting a sliding of the insertion piston out of a malposition into a receiving shaft.

7. The electromotive kitchen appliance as claimed in one of claims 5 or 6, which has a plurality of force transmission segments (22), at the points of which the arched guide segments (23) are embodied in each case.

8. The electromotive kitchen appliance as claimed in claim 7, wherein the force transmission segments (22) are embodied along an outer contour of the insertion piston in each case essentially circular-cylindrically with the cylinder axis parallel to the axis of rotation of the insertion piston.

9. The electromotive kitchen appliance as claimed in one of the preceding claims, wherein the coupling part has a plurality of force transmission elements (14, 44), wherein the insertion piston has a plurality of force transmission segments (22) and wherein the force transmission elements and the force transmission segments are actively connected to one another.

10. The electromotive kitchen appliance as claimed in claim 9, wherein the guide elements (43) are embodied in one piece on the force transmission elements.

11. The electromotive kitchen appliance as claimed in one of the preceding claims, wherein the insertion piston is fitted into the coupling part essentially without a gap.

12. The electromotive kitchen appliance as claimed in one of the preceding claims, wherein the coupling part (10, 40) and/or the insertion piston (20, 50) consist entirely or partially of plastic.

## Revendications

1. Appareil de cuisine à moteur électrique avec un moteur pour l'entraînement d'un dispositif rotatif et avec un accouplement, dans lequel le moteur est disposé dans une première partie d'appareil et le dispositif rotatif dans une deuxième partie d'appareil reliée ou pouvant être reliée à la première partie d'appareil, dans lequel l'accouplement comprend une pièce d'accouplement (10, 40) et un piston à emmancher (20, 50) pour la transmission d'un mouvement rotatif d'un arbre de sortie de moteur au dispositif rotatif, dans lequel la pièce d'accouplement présente un orifice d'emmanchement (11, 41) qui est un orifice d'un puits ou d'une bague d'accueil (14) pour l'accueil d'au moins une partie du piston à emmancher (20, 50), **caractérisé en ce qu'**une pluralité d'éléments de guidage (13, 43) pour le piston à emmancher sont disposés sur l'orifice d'emmanchement (11, 41), lesquels présentent pour la correction d'un sens d'emmanchement respectivement une surface pré-bombée, en direction d'un arbre (30b) relié au piston à emmancher à emmancher.

2. Appareil de cuisine à moteur électrique selon la revendication 1, dans lequel la pluralité d'éléments de guidage sont disposés le long d'une bague autour de l'orifice d'emmanchement (11, 41).

3. Appareil de cuisine à moteur électrique selon l'une des revendications 1 ou 2, dans lequel les éléments de guidage sont essentiellement exécutés sous forme ellipsoïdale ou sphérique et sont logés en rotation.

4. Appareil de cuisine à moteur électrique selon l'une des revendications précédentes, dans lequel les éléments de guidage sont aménagés afin de faire office d'éléments de transition de force en liaison fonctionnelle avec une pluralité de segments de transition de force du piston à emmancher.

5. Appareil de cuisine à moteur électrique selon l'une des revendications précédentes, dans lequel le piston à emmancher présente une calotte (21) avec une pluralité de segments de guidage bombés (23).

6. Appareil de cuisine à moteur électrique avec un moteur pour l'entraînement d'un dispositif rotatif et avec un accouplement, dans lequel le moteur est disposé dans une première partie d'appareil et le dispositif rotatif dans une deuxième partie d'appareil reliée ou pouvant être reliée à la première partie d'appareil, dans lequel l'accouplement comprend une pièce d'accouplement (10, 40) et un piston à emmancher (20, 50) pour la transmission d'un mouvement rotatif d'un arbre de sortie de moteur au dispositif rotatif, dans lequel la pièce d'accouplement présente un orifice d'emmanchement (11, 41) pour l'accueil d'au moins une partie du piston à emmancher (20, 50), **caractérisé en ce que** le piston à emmancher présente une calotte (21) avec une pluralité de segments de guidage (23) pré-bombés dans le sens d'un arbre (30a) relié à la pièce d'accouplement, qui favorisent un glissement du piston à emmancher au départ d'un mauvais positionnement dans un puits d'accueil.

7. Appareil de cuisine à moteur électrique selon l'une des revendications 5 ou 6, qui présente une pluralité de segments de transmission de force (22) sur les calottes desquels les segments de guidage courbés (23) sont respectivement exécutés.

8. Appareil de cuisine à moteur électrique selon la revendication 7, dans lequel les segments de transition de force (22) sont exécutés le long d'un contour extérieur du piston à emmancher respectivement essentiellement de façon circulaire cylindrique avec un axe de cylindre parallèle à l'axe de rotation du piston à emmancher.

9. Appareil de cuisine à moteur électrique selon l'une des revendications précédentes, dans lequel la pièce d'accouplement présente une pluralité d'éléments de transition de force (14, 44), dans lequel le piston à emmancher présente une pluralité de segments de transition de force (22) et dans lequel les éléments de transition de force et les segments de transition de force se trouvent en liaison fonctionnelle.

10. Appareil de cuisine à moteur électrique selon la revendication 9, dans lequel les éléments de guidage (43) sont exécutés en une seule pièce sur les éléments de transition de force.

11. Appareil de cuisine à moteur électrique selon l'une des revendications précédentes, dans lequel le piston à emmancher est essentiellement adapté sans espace intermédiaire dans la pièce d'accouplement.

12. Appareil de cuisine à moteur électrique selon l'une des revendications précédentes, dans lequel la pièce d'accouplement (10, 40) et/ou le piston à emmancher (20, 50) sont intégralement ou partiellement en plastique.
